# EUROPÄISCHE PATENTANMELDUNG

(11) **EP 3 995 286 A1**
(43) Veröffentlichungstag der Anmeldung: **11.05.2022**
(21) Anmeldenummer: 21206914.0
(22) Anmeldetag: 08.11.2021
(51) Int. Cl.: B29C 51/16, B29C 51/10, B29C 51/26, B29C 51/30, B29C 51/38, B29L 31/00

(54) **FORMSTATION ZUM AUSFORMEN VON VERPACKUNGSMULDEN**

(30) Priorität: 10.11.2020 DE 102020129551
(71) Anmelder: Multivac Sepp Haggenmüller GmbH & Co. KG, 87787 Wolfertschwenden (DE)
(72) Erfinder: Petermichl, Sascha, 87763 Lautrach (DE)
(74) Vertreter: Grünecker Patent- und Rechtsanwälte PartG mbB

(57) **Zusammenfassung**

Die Erfindung betrifft eine Formstation zum Ausformen von Verpackungsmulden, die Formstation umfassend ein Oberwerkzeug und ein Unterwerkzeug, die relativ zueinander bewegbar sind, wobei das Unterwerkzeug wenigstens eine Aufnahme für einen Verpackungsrohkörper umfasst, wobei die Formstation weiterhin einen mit dem Unterwerkzeug beweglich verbundenen Rahmen umfasst, der zwischen dem Oberwerkzeug und dem Unterwerkzeug angeordnet ist, wobei das Unterwerkzeug wenigstens einen Klemmmechanismus zum Fixieren eines Verpackungsrohkörpers in der Aufnahme umfasst und wobei der Klemmmechanismus ein Klemmelement umfasst, das durch eine Bewegung des Rahmens relativ zum Unterwerkzeug betätigbar und zum Fixieren eines Verpackungsrohkörpers in der Aufnahme ausgebildet ist.

## Beschreibung

Die vorliegende Erfindung betrifft eine Formstation zum Ausformen von Verpackungsmulden gemäß Anspruch 1 sowie ein Verfahren zum Ausformen von Verpackungsmulden mittels einer Formstation gemäß Anspruch 10.

### Stand der Technik

Aus dem Stand der Technik sind Formstationen zum Ausformen von Verpackungsmulden grundsätzlich bekannt. Diese Formstationen umfassen üblicherweise zwei relativ zueinander bewegliche Teile, die als Oberwerkzeug und als Unterwerkzeug bekannt sind.

In dem Unterwerkzeug werden manuell oder automatisch Verpackungsrohkörper, etwa Schalen aus Pappe (inkl. Karton), eingelegt. Das Oberwerkzeug positioniert eine an den Verpackungsrohkörper anzuformende Folie über dem Verpackungsrohkörper und durch das Anlegen eines Vakuums wird diese in Richtung des Verpackungsrohkörpers gezogen und legt sich an diesen an, womit die Verpackungsmulde ausgeformt ist. Um die Folie formbar zu machen, kann diese durch das Oberwerkzeug erwärmt werden.

Nachdem sich die Folie an den Verpackungsrohkörper angeformt hat, werden Oberwerkzeug und Unterwerkzeug wieder auseinander bewegt. Dabei kann es zu einem Mitnahmeeffekt oder Anheben der Verpackung kommen, wenn das Oberwerkzeug vom Unterwerkzeug entfernt wird. Dies kann zu Fehlstellung der Verpackung führen, was für nachgeordnete Abläufe oder für die Entnahme der Verpackung problematisch ist.

### Aufgabe

Ausgehend vom bekannten Stand der Technik besteht die zu lösende technische Aufgabe darin, eine Formstation anzugeben, mit der ein Lösen des Oberwerkzeugs vom Unterwerkzeug mit reduziertem Risiko einer Mitnahme einer ausgeformten Verpackungsmulde realisiert wird.

### Lösung

Diese Aufgabe wird durch die Formstation zum Ausformen von Verpackungsmulden nach Anspruch 1 oder das Verfahren zum Ausformen von Verpackungsmulden nach Anspruch 10 gelöst. Vorteilhafte Weiterbildungen der Erfindung sind in den Unteransprüchen erfasst.

Die erfindungsgemäße Formstation zum Ausformen von Verpackungsmulden umfasst ein Oberwerkzeug und ein Unterwerkzeug, die relativ zueinander bewegbar sind, wobei das Unterwerkzeug wenigstens eine Aufnahme für einen Verpackungsrohkörper umfasst, wobei die Formstation weiterhin einen mit dem Unterwerkzeug beweglich verbundenen Rahmen umfasst, der zwischen dem Oberwerkzeug und dem Unterwerkzeug angeordnet ist, wobei das Unterwerkzeug wenigstens einen Klemmmechanismus zum Fixieren eines Verpackungsrohkörpers in der Aufnahme umfasst und wobei der Klemmmechanismus ein Klemmelement umfasst, das durch eine Bewegung des Rahmens relativ zum Unterwerkzeug betätigbar und zum Fixieren eines Verpackungsrohkörpers in der Aufnahme ausgebildet ist.

Die Bewegung des Oberwerkzeugs und des Unterwerkzeugs relativ zueinander erfolgt hier, um beispielsweise eine Folie bezüglich des Verpackungsrohkörpers zu positionieren, die dann mittels der Formstation an dem Verpackungsrohkörper angeformt werden kann, um eine Verpackungsmulde auszuformen. Dies kann etwa durch Tiefziehen erfolgen, wobei auf der Seite des Unterwerkzeugs ein Vakuum oder Unterdruck angelegt wird, sodass die Folie in Richtung des Verpackungsgrundkörpers gezogen wird und sich an diesen anlegt.

In diesem Sinne ist hier und im Folgenden unter einer "Verpackungsmulde" die Kombination aus dem Verpackungsrohkörper und einer Folie (aus beliebigem Material), die an die Form des Verpackungsgrundkörpers zumindest stellenweise angeformt ist, zu verstehen.

Durch den Klemmmechanismus, der durch den zwischen dem Unterwerkzeug und dem Oberwerkzeug angeordneten Rahmen bewegt wird, kann eine genaue Einstellung der Klemmwirkung zum Fixieren des Verpackungsrohkörpers und auch eine genaue Einstellung der Dauer der Fixierung erfolgen. Damit kann ein Mitnehmen der Verpackungsmulden beim Entfernen des Oberwerkzeugs vermieden werden.

In einer Ausführungsform ist vorgesehen, dass der Klemmmechanismus einen beweglichen Anker umfasst und das Klemmelement in einer Führung angeordnet ist, wobei der Klemmmechanismus ausgebildet ist, eine Bewegung des Rahmens relativ zum Unterwerkzeug in eine Bewegung des Ankers umzusetzen und durch die Bewegung des Ankers eine Bewegung des Klemmelements in der Führung zu bewirken.

Dieser bewegliche Anker ist bevorzugt relativ zu dem Klemmelement beweglich angeordnet, so dass das Klemmelement beispielsweise auch aufgrund der Kontur des Ankers in der Führung bewegt werden kann. Dies erlaubt eine mechanisch zuverlässige Steuerung der Bewegung des Klemmelements und ist nicht auf separate Motoren oder andere Einrichtungen angewiesen. Damit ergibt sich auch eine zuverlässige Synchronisation mit der Bewegung des Rahmens.

In einer Weiterbildung weisen der Anker und/oder die Führung und/oder das Klemmelement eine Form auf, die so beschaffen ist, dass sie eine über den Hubweg des Rahmens nicht konstante Bewegung des Klemmelements bewirken können. Eine nicht konstante Bewegung ist in diesem Sinne so zu verstehen, dass sich die Bewegungsamplitude des Klemmelements über den Hubweg des Rahmens ändert. Dies kann beispielsweise dergestalt ausgeführt sein, dass über einen ersten Teil des Hubwegs des Rahmens eine Bewegung des Klemmelements nicht erfolgt, über einen zweiten Teil dann eine Bewegung mit geringer Amplitude erfolgt und über einen dritten Teil des Hubwegs eine Bewegung mit einer größeren Amplitude erfolgt. Damit kann speziellen Anforderungen an die Bewegung des Klemmelements Rechnung getragen werden.

Es kann vorgesehen sein, dass die Formstation wenigstens zwei Aufnahmen umfasst und der Klemmmechanismus als gemeinsamer Klemmmechanismus zum Fixieren von Verpackungsrohkörpern in den wenigstens zwei Aufnahmen ausgebildet ist. Die strukturelle Komplexität der Formstation und insbesondere der Klemmmechanismen zum Fixieren auch mehrerer Verpackungsrohkörper kann so möglichst gering gehalten werden, was auch die Fehleranfälligkeit der Formstation reduziert.

In einer Weiterbildung dieser Ausführungsform ist vorgesehen, dass der gemeinsame Klemmmechanismus zwei Klemmelemente umfasst, wobei jeweils eines der Klemmelemente einer der wenigstens zwei Aufnahmen zugeordnet ist und wobei die Klemmelemente durch eine Bewegung des Rahmens relativ zum Unterwerkzeug gleichzeitig betätigbar sind. Insbesondere kann die Bewegung der Klemmelemente durch ein einziges Element, beispielsweise durch einen einzigen Anker, synchron erfolgen. Diese Ausgestaltung reduziert die strukturelle Komplexität der Formstation und verbessert die Zuverlässigkeit im Betrieb.

Ferner kann vorgesehen sein, dass jeder Aufnahme der Formstation zwei Klemmmechanismen zugeordnet sind, wobei jeder Klemmmechanismus ein Klemmelement umfasst und die Klemmelemente angeordnet sind, um einen Verpackungsrohkörper an gegenüberliegenden Seiten zu fixieren. Das Fixieren des Verpackungsrohkörpers wird so zuverlässig gewährleistet.

In einer Ausführungsform umfasst das Klemmelement auf einer der Aufnahme zugewandten Seite ein Reibelement, wobei das Reibelement eine äußere Oberfläche mit einem Material mit hohem Reibungskoeffizienten bezüglich wenigstens einem von Pappe, Naturfaser, Papier, Bambus, Plastik umfasst. Mit dieser Ausführungsform wird ein Weggleiten des Verpackungsrohkörpers von den Klemmelementen auch bei geringem Klemmdruck der Klemmelemente am Verpackungsrohkörper vermieden.

Weiterhin kann der Rahmen eine zu der Aufnahme entsprechende Öffnung aufweisen, sodass ein Verpackungsrohkörper bei einer Bewegung des Rahmens auf das Unterwerkzeug zu durch die Öffnung hindurchtreten kann. Der Rahmen kann so zumindest teilweise unter den Verpackungsrohkörper und/oder die Aufnahme für den Verpackungsrohkörper "abtauchen" und das Oberwerkzeug kann zuverlässig zum Aufbringen einer Folie positioniert werden.

In einer Ausführungsform ist der Rahmen mit dem Unterwerkzeug mittels eines Rückstellelements verbunden, das ein Rückstellen des Rahmens in eine Ausgangsposition beim Auseinanderbewegen des Unterwerkzeugs und des Oberwerkzeugs bewirken kann, und/oder der Klemmmechanismus umfasst ein Rückstellelement, das ein Rückstellen des Klemmelements in eine Freigabeposition beim Auseinanderbewegen des Unterwerkzeugs und des Rahmens bewirken kann. Ein versehentliches oder unerwünschtes Feststellen des Rahmens in seiner dem Unterwerkzeug angenäherten Position oder des Klemmmechanismus in der Klemmposition wird so vermieden, was trotz der Fixierung des Verpackungsrohkörpers ein Herauslösen des Verpackungsrohkörpers aus der Aufnahme etwa zu einem bestimmten Zeitpunkt sicherstellt.

Als weiterer Aspekt der Erfindung ist ferner ein Verfahren zum Ausformen von Verpackungsmulden mittels einer Formstation vorgesehen, wobei die Formstation ein Oberwerkzeug und ein Unterwerkzeug umfasst, die relativ zueinander bewegbar sind, wobei das Unterwerkzeug wenigstens eine Aufnahme für einen Verpackungsrohkörper umfasst, wobei die Formstation weiterhin einen mit dem Unterwerkzeug beweglichen verbundenen Rahmen umfasst, der zwischen dem Oberwerkzeug und dem Unterwerkzeug angeordnet ist, wobei das Unterwerkzeug wenigstens einen Klemmmechanismus zum Fixieren des Verpackungsrohkörpers in der Aufnahme umfasst und wobei der Klemmmechanismus ein Klemmelement umfasst, das durch eine Bewegung des Rahmens relativ zum Unterwerkzeug betätigt wird und einen Verpackungsrohkörpers in der Aufnahme fixiert, wobei der Rahmen durch ein Aufeinanderzubewegen des Unterwerkzeugs und des Oberwerkzeugs in Richtung des Unterwerkzeugs bewegt wird und hierdurch das Klemmelement zum Fixieren des Verpackungsrohkörpers in der Aufnahme betätigt wird.

Mit diesem Verfahren lässt sich ein Ausformen von Verpackungsmulden zuverlässig realisieren, wobei das Risiko einer Mitnahme der Verpackungsmulde durch das Oberwerkzeug minimiert wird.

In einer Ausführungsform umfasst der Klemmmechanismus einen beweglichen Anker und das Klemmelement ist in einer Führung angeordnet, wobei der Klemmmechanismus eine Bewegung des Rahmens relativ zum Unterwerkzeug in eine Bewegung des Ankers umsetzt und wobei die Bewegung des Ankers eine Bewegung des Klemmelements in der Führung bewirkt. Hiermit wird auf strukturell wenig fehleranfällige Weise eine Bewegung des Klemmelements realisiert.

Es kann vorgesehen sein, dass der Anker und/oder die Führung und/oder das Klemmelement eine Form aufweisen, die so beschaffen ist, dass sie eine über den Hubweg des Rahmens nicht konstante Bewegung des Klemmelements bewirken. Mit dieser Ausführungsform sind auch variable Bewegungsabläufe realisierbar.

In einer Ausführungsform ist vorgesehen, dass das Klemmelement auf einer der Aufnahme zugewandten Seite ein Reibelement umfasst, wobei das Reibelement eine äußere Oberfläche mit einem Material mit hohem Reibungskoeffizienten bezüglich des Materials des Verpackungsrohkörpers umfasst. Der Verpackungsrohkörper kann insbesondere aus Pappe, Naturfaser, Papier, Bambus oder Plastik bestehen oder solches umfassen. Durch einen hohen Reibungskoeffizienten, insbesondere einen hohen Gleitreibungskoeffizienten des Reibelements bezüglich des Materials des Verpackungsrohkörpers, kann die Anpresskraft des Klemmelements an den Verpackungsrohkörper verhältnismäßig klein bleiben und gleichzeitig ein zuverlässiges Fixieren gewährleistet werden. Beschädigungen des Verpackungsrohkörpers werden so vermieden.

Ferner kann der Rahmen eine zu der Aufnahme entsprechende Öffnung aufweist, sodass ein Verpackungsrohkörper bei einer Bewegung des Rahmens auf das Unterwerkzeug zu durch die Öffnung hindurchtritt. Hiermit kann trotz der notwendigen Funktion des Rahmens zum Betätigen des Klemmmechanismus ein zuverlässiges Anbringen oder Interagieren mit dem Unterwerkzeug realisiert werden.

In einer Ausführungsform ist vorgesehen, dass der Rahmen mit dem Unterwerkzeug mittels eines Rückstellelements verbunden ist, das ein Rückstellen des Rahmens in eine Ausgangsposition beim Auseinanderbewegen des Unterwerkzeugs und des Oberwerkzeugs bewirkt, und/oder dass der Klemmmechanismus ein Rückstellelement umfasst, das ein Rückstellen des Klemmelements in eine Freigabeposition beim Auseinanderbewegen des Unterwerkzeugs und des Rahmens bewirkt. Ein periodisch wiederkehrender Bewegungsablauf kann so gewährleistet werden.

### Kurze Beschreibung der Figuren

- Fig. 1: zeigt eine schematische Ansicht einer Formstation gemäß einer Ausführungsform.
- Fig. 2: zeigt eine detailliertere Ansicht des Unterwerkzeugs und des Rahmens der Fig. 1 gemäß einer Ausführungsform.
- Fig. 3a - e: zeigen den Bewegungsablauf beim Ausformen von Verpackungsmulden mittels einer Formstation gemäß einer Ausführungsform.

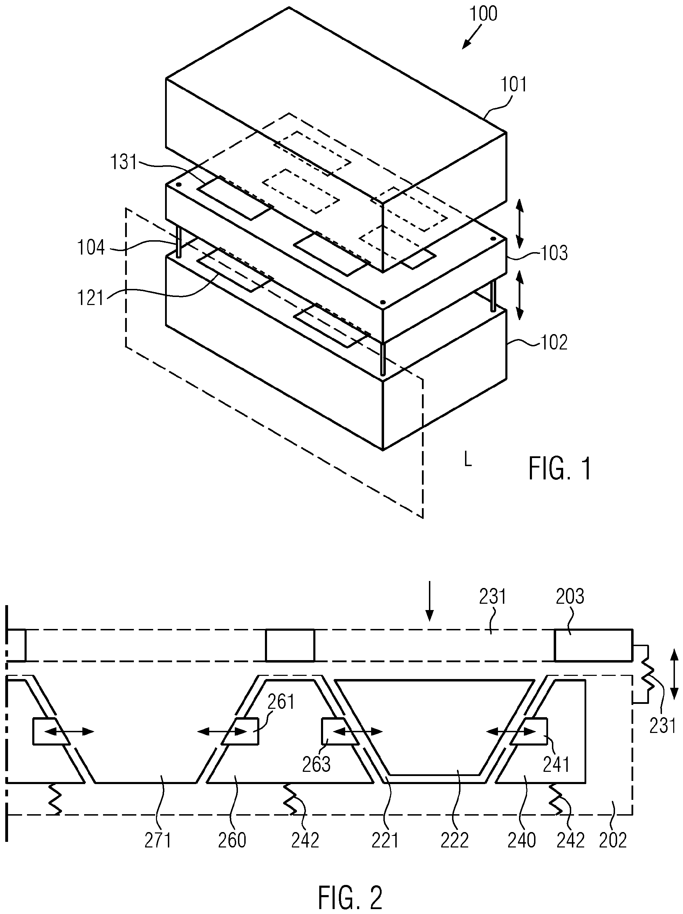

Fig. 1 zeigt eine Ausführungsform einer Formstation 100, wie sie im Rahmen einiger Ausführungsformen zum Einsatz kommen kann. Die Formstation ist hier isoliert von weiteren Einrichtungen dargestellt, auf die im Folgenden noch kurz eingegangen wird.

Grundsätzlich umfasst die Formstation gemäß der hier dargestellten Ausführungsform ein Unterwerkzeug 102, ein Oberwerkzeug 101 und einen dazwischen angeordneten Rahmen 103.

Die Formstation 100 wird dazu verwendet, Verpackungsmulden (hier nicht dargestellt) auszuformen. Unter solchen Verpackungsmulden soll im Folgenden die Kombination aus einem Verpackungsrohkörper (etwa einem aus Karton, Plastik, Naturstoffen wie Bambus oder Naturfasern oder ähnlichem bestehenden Rohkörper) und einer daran angeformten Folie oder anderen Materialschicht verstanden werden. Zum Ausformen der Verpackungsmulde wird die Folie oder andere Materialschicht mit dem Verpackungsrohkörper in Verbindung gebracht, so dass sich die Folie oder die Materialschicht an die Kontur, insbesondere die innere Kontur, des Verpackungsrohkörpers anformt.

Als ein Beispiel kann etwa ein Verpackungsrohkörper bestehend aus Pappe angesehen werden, in den eine Folie aus Plastik mit Hilfe der Formstation angeformt wird, um so die hergestellte Verpackungsmulde gegenüber Wasser oder anderen Flüssigkeiten undurchlässig zu gestalten.

Zu diesem Zweck wirken das Unterwerkzeug 102 und das Oberwerkzeug 101 derart zusammen, dass ein oder mehrere Verpackungsrohkörper in die in Fig. 1 dargestellten Aufnahmen 121 des Unterwerkzeugs 102 eingebracht werden und mithilfe des Oberwerkzeugs 101 eine Folie relativ zu den Verpackungsrohkörpern in den Aufnahmen 121 positioniert wird. Dazu wird das Oberwerkzeug 101 relativ zum Unterwerkzeug 102 bewegt, sodass sich diese bis zum berührenden Kontakt annähern.

Anschließend kann etwa durch Anlegen eines Vakuums in den Aufnahmen des Unterwerkzeugs 102 die Folie vom Oberwerkzeug 101 abgezogen und in Richtung des Verpackungsrohkörpers gesogen werden, an den sich die Folie dann anformen kann. Zu diesem Zweck kann die Folie (oder andere Materialschicht) auch erwärmt werden, etwa durch im Oberwerkzeug 101 vorgesehene Heizelemente. Es ist ferner möglich, dass zusätzlich zu dem durch das Unterwerkzeug 102 bewirkte Vakuum eine Gasströmung vom Oberwerkzeug 101 in Richtung der Folie ausgebracht wird, um die Folie zusätzlich in Richtung des Verpackungsrohkörpers zu bewegen und von dem Oberwerkzeug 101 zu lösen.

Zwischen Oberwerkzeug 101 und Unterwerkzeug 102 ist ein Rahmen 103 angeordnet, der beweglich, etwa über die Verbindungselemente 104, mit dem Unterwerkzeug 102 verbunden, nicht jedoch zwangsläufig eine Verbindung mit dem Oberwerkzeug 101 besitzt. Wird nun das Oberwerkzeug 101 in Richtung des Unterwerkzeugs 102 bewegt, so wird der Rahmen 103 in Richtung des Unterwerkzeugs "mitgenommen".

Der Rahmen 103 kann Öffnungen 131 aufweisen, die hinsichtlich ihrer Größe mit den Aufnahmen 121 und insbesondere der oberen Öffnungen der Aufnahmen 121 zusammenfallen und mit diesen kongruent sind (in der perspektivischen Ansicht zu erkennen und in Fig. 2 genauer dargestellt), so dass die von dem Oberwerkzeug 101 über dem Rahmen 103 (zumindest in der Ausrichtung, die in Fig. 1 dargestellt ist) in Position gebrachte Folie in Richtung der in den Aufnahmen 121 befindlichen Verpackungsrohkörper verbracht werden kann, um so die Verpackungsmulden zu formen.

Das Oberwerkzeug 101, der Rahmen 103 und das Unterwerkzeug befinden sich in dieser Reihenfolge bei Anlegen des Vakuums zum Ausformen der Verpackungsmulden bevorzugt in berührendem Kontakt, so dass die Sogwirkung des Vakuums möglichst vollständig durch die Verpackungsrohkörper hindurch die Folie (oder andere Materialschicht) anzieht.

Die hier dargestellte Formstation 100 kann als vollautomatische Formstation als Teil einer größeren Formmaschine ausgebildet sein. Dazu kann etwa stromaufwärts (bezogen auf eine Prozessrichtung, in der die Verpackungsrohkörper und/oder Verpackungsmulden transportiert werden) der Formstation 100 eine Zuführeinrichtung angeordnet sein, die Verpackungsrohkörper den Aufnahmen 121 des Unterwerkzeugs 102 zuführt. Stromab der Formstation 100 kann dann eine Entnahmeeinrichtung angeordnet sein, die die ausgeformten Verpackungsmulden aus den Aufnahmen 121 entnimmt. Der ganze Prozess kann zyklisch ablaufen, so dass vollautomatisch neue Verpackungsrohkörper zugeführt und ausgeformte Verpackungsmulden aus der Formstation entnommen werden.

Alternativ kann die Formstation auch als Teil einer manuell oder teilautomatisch betriebenen Formmaschine ausgebildet sein. So kann etwa die Zuführeinrichtung oder die Entnahmeeinrichtung entfallen und das Zuführen der Verpackungsrohkörper oder das Entnehmen der Verpackungsmulden händisch erfolgen. Es ist auch denkbar, dass sowohl das Zuführen der Verpackungsrohkörper als auch das Entnehmen der Verpackungsmulden manuell erfolgen, indem ein Bediener die Verpackungsrohkörper einlegt, dann die Formstation bedient und anschließend die ausgeformten Verpackungsmulden aus der Formstation entnimmt.

Die Erfindung ist diesbezüglich nicht beschränkt.

Fig. 2 zeigt eine detailliertere Ansicht des Unterwerkzeugs 202 und des Rahmens 203 gesehen auf die Schnittebene L, die zumindest durch eine Reihe nebeneinander in der Schnittebene L angeordneter Aufnahme 221 und 271 (entsprechend 121 in Fig. 1) verläuft.

Zur einfacheren Darstellung ist in der in Fig. 2 dargestellten Ansicht der äußere Bereich des Unterwerkzeugs 202 gestrichelt dargestellt. Es versteht sich, dass auch dieser Bereich mit Material des Unterwerkzeugs 202 zumindest teilweise angefüllt sein oder Komponenten enthalten kann, die im Folgenden jedoch nicht im Detail beschrieben werden.

Wie hier zu sehen ist, ist der Rahmen 203 zum Unterwerkzeug 202 so angeordnet, dass die Öffnung des Rahmens 231 mit der Aufnahme 221 zusammenfällt, so dass der entstehende Öffnungsbereich von Rahmen 203 und Aufnahme 221 so groß ist, dass ein in der Aufnahme 221 angeordneter Verpackungsrohkörper 222 durch den entstehenden Öffnungsbereich hindurch entnommen werden könnte. Dies ermöglicht ein Einbringen der Folie von oberhalb (Pfeil) mittels des Oberwerkzeugs über die gesamte Größe des Verpackungsrohkörpers in der Aufnahme 221.

In einer Ausführungsform ist vorgesehen, dass das Unterwerkzeug 221 einen Klemmmechanismus 240, 260 umfasst. Dieser Klemmmechanismus ist derart ausgebildet, dass er durch eine Bewegung des Rahmens 203 in Richtung des Unterwerkzeugs 202 betätigt werden kann, so dass ein Klemmelement 241, 261, 263 des Klemmmechanismus in Richtung auf den Verpackungsrohkörper in der Aufnahme 221 zu bewegt wird. Diese Bewegung erfolgt derart, dass das Klemmelement den Verpackungsrohkörper zumindest in einer maximal auf das Unterwerkzeug abgesenkten Position des Rahmens 203 berührt.

Dadurch kann ein Fixieren des Verpackungsrohkörpers 222 in der Aufnahme 221 bewirkt werden. Durch diese Fixierung ist ein zuverlässiges Einbringen der Folie (oder anderer Materialschicht) und Ausformen der Verpackungsmulde möglich, da eine Bewegung des Verpackungsrohkörpers relativ zur Aufnahme 221 vermieden wird.

Wird die Fixierung mithilfe des Klemmelements aufrecht erhalten, wenn sich das Oberwerkzeug bereits von dem Rahmen 203 wegbewegt (entgegen der dargestellten Pfeilrichtung) kann auch sichergestellt werden, dass ein vollständiges Lösen von Folienresten, die mit dem Oberwerkzeug mitgeführt werden, von der Verpackungsmulde bewirkt wird, ohne dass die Verpackungsmulde sich innerhalb der Aufnahme 221 bewegt oder mit dem Oberwerkzeug mitgezogen wird.

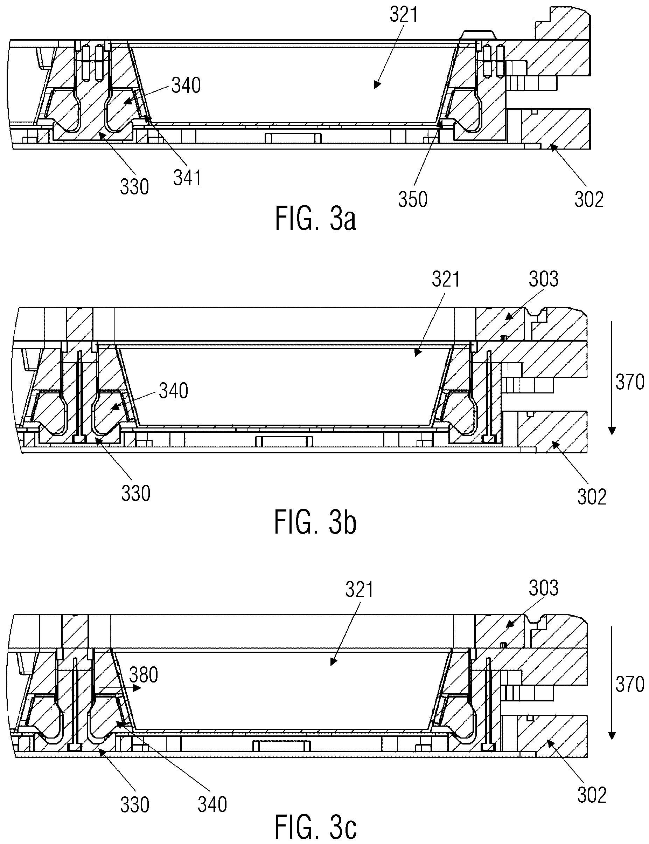

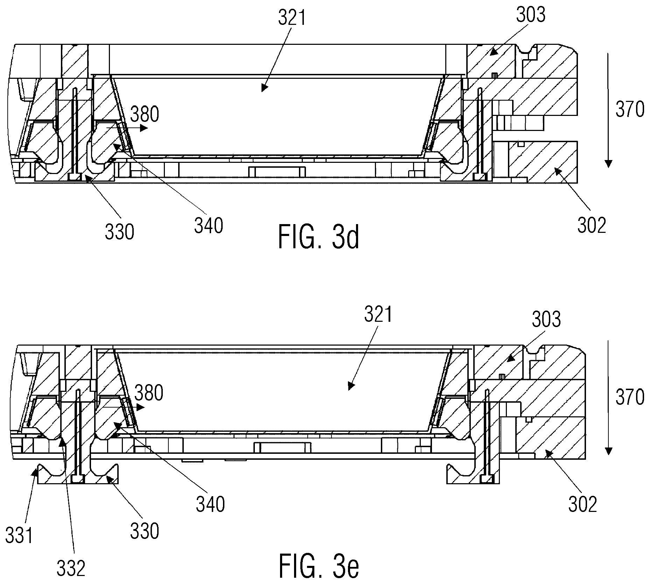

Die genauere Ausgestaltung des Klemmmechanismus wird mit Bezug auf Fig. 3 beschrieben.

In der in Fig. 2 dargestellten Ausführungsform umfasst der Klemmmechanismus 240 nur ein Klemmelement 241 und kann in diesem Sinne beispielsweise als ein äußerster Klemmmechanismus genutzt werden. Weiter innen liegende Klemmmechanismen, wie etwa der Klemmmechanismus 260 können zwei Klemmelemente 261, 262 umfassen, die jeweils zum Fixieren von Verpackungsrohkörpern in benachbarten Aufnahmen 221, 271 ausgebildet sein können. Alternativ können im Bereich des hier gezeigten Klemmmechanismus 260 auch entsprechend dem Klemmmechanismus 240 zwei separate Klemmmechanismen mit nur jeweils einem Klemmelement vorgesehen sein.

Es kann auch vorgesehen sein, dass ein Klemmmechanismus mehr als zwei Klemmelemente umfasst. In diesem Sinne sind in Fig. 1 im Unterwerkzeug 102 vier Aufnahmen 121 dargestellt. Der Klemmmechanismus kann sich in einer Richtung senkrecht zu der Ebene L soweit durch das Unterwerkzeug hindurch erstrecken, dass nicht nur die in der hier dargestellten Richtung von links nach rechts benachbarten Aufnahmen und darin angeordnete Verpackungsrohkörper, sondern auch in einer Richtung senkrecht dazu benachbarte Aufnahmen und darin angeordnete Verpackungsrohkörper mit demselben Klemmmechanismus interagieren können, wobei für jede Aufnahme und den darin angeordneten Verpackungsrohkörper jeweils ein Klemmelement vorgesehen ist.

Dies bedeutet, dass ein Klemmmechanismus 260 entsprechend der Fig. 2 die hier dargestellten zwei Klemmelemente 261, 263 und in einer weiteren Ebene parallel zu der Ebene Lweitere Klemmelemente umfassen kann, die jeweils in eine Aufnahme links und rechts des Klemmmechanismus eingreifen können.

In diesem Sinne wirkt der Klemmmechanismus 260 als gemeinsamer Klemmmechanismus benachbarter Aufnahmen. Dies kann insbesondere dann von Vorteil sein, wenn das Unterwerkzeug in regelmäßigen Abständen zueinander angeordnete Aufnahmen umfasst.

Insbesondere kann vorgesehen sein, dass bei Vorsehen eines gemeinsamen Klemmmechanismus die Klemmelemente von benachbarten Aufnahmen gleichzeitig betätigt werden können, was eine synchrone Fixierung und/oder ein synchrones Lösen der Fixierung der Verpackungsrohkörper 222 in den entsprechenden Aufnahmen gewährleisten kann.

Wie in Fig. 2 zu erkennen, sind in dieser Ausführungsform jeder Aufnahme 221 zwei gegenüberliegende Klemmelemente zugeordnet. Dies sind für die Aufnahme 221 die Klemmelemente 241, 263. Dies erlaubt ein Fixieren eines Verpackungsrohkörpers 222 in der Aufnahme 221 auf zumindest zwei gegenüberliegenden Seiten, womit bei synchroner Bewegung der Klemmelemente auch eine mittige Positionierung des Verpackungsrohkörper 222 in der Aufnahme 221 bewirkt wird.

Die Aufnahmen müssen jedoch keine eckige oder rechteckige Form, wie in Fig. 1 dargestellt, aufweisen. Sie können auch rund, oval oder dreieckig ausgestaltet sein. Jede Form von Aufnahmen ist hier denkbar, so dass beliebige Formen von Verpackungsrohkörpern bearbeitet werden können. Bevorzugt entspricht aber die innere Form der Aufnahme der äußeren Form des in ihr aufzunehmenden Verpackungsrohkörpers.

Handelt es sich bei der Form der Aufnahmen und entsprechender Form der Verpackungsrohkörper um eine geometrische Form, die keine direkt gegenüberliegenden Seiten aufweist (etwa dreieckige oder fünfeckige Form), so ist in einer Ausführungsform vorgesehen, dass die zumindest zwei für die Aufnahme 221 vorgesehenen Klemmelemente 241, 263 möglichst maximalen Abstand zueinander, gemessen durch den Mittelpunkt der Aufnahme 221, aufweisen, um möglichst weit voneinander entfernte Angriffspunkte an dem Verpackungsrohkörper zu realisieren. Damit kann ein Schub des Verpackungsrohkörpers in eine Richtung innerhalb der Aufnahme vermieden werden.

In einigen Ausführungsformen, etwa auch der in Fig. 2 dargestellten, kann der Klemmmechanismus 241 ein Rückstellelement 242 umfassen. Analoges gilt für den Klemmmechanismus 260 und das dazugehörige Rückstellelement 262. Dieses Rückstellelement 242, 262 ist vorgesehen, um ein Rückstellen des Klemmelements sicherzustellen, wenn der Rahmen 203 vom Unterwerkzeug 202 angehoben wird und somit ein zuverlässiges Lösen der Fixierung des Verpackungsrohkörpers zu erreichen. Dieses Rückstellelement 242, 262 kann beispielsweise als Federelement ausgeführt sein. Das Federelement kann eine Feder (etwa eine Metallfeder) aber auch ein elastisches Element, etwa aus Gummi oder Polyurethan umfassen, das bei Komprimierung eine gegen die Komprimierung wirkende Kraft ausübt. Es kann jedoch auch derart ausgestaltet sein, dass durch eine Aufwärtsbewegung des Rahmens 203 ein Mitnehmer bewegt wird, der das Klemmelement 241 (und analog die übrigen Klemmelemente) wieder in die Freigabeposition, in der das Klemmelement keine Fixierung des Verpackungsrohkörpers bewirkt, verbringt.

Der Rahmen 203 kann mit dem Unterwerkzeug über ein weiteres Rückstellelement 251 beweglich verbunden sein. Dieses Rückstellelement kann so ausgestaltet sein, dass bei einem Anheben des hier nicht dargestellten Oberwerkzeugs (siehe Fig. 1) auch ein Anheben des Rahmens 203 durch eine Rückstellkraft des Rückstellelements 251 bewirkt wird. Damit wird ein Lösen des Rahmens vom Unterwerkzeug 202 bewirkt, nachdem das Oberwerkzeug 101 angehoben wurde, so dass sich der Rahmen vom Unterwerkzeug 202 anhebt. Dies kann gleichzeitig ein Rückstellen des Klemmelements 241 des Klemmmechanismus 240 bewirken, etwa auch im Zusammenspiel mit dem Rückstellelement 242.

Die Fig. 3a - 3e zeigen eine Ausführungsform des Bewegungsablaufs bei einem Absenken des Rahmens in Richtung des Unterwerkzeugs 202. Auf eine separate Darstellung der Rückstellelemente wurde hier verzichtet. Diese sind jedoch auch in dieser Ausführungsform entsprechend den im Zusammenhang mit der Fig. 2 beschriebenen Ausführungsformen realisierbar.

In der in Fig. 3 dargestellten Ausführungsform ist in Fig. 3a eine Ausgangssituation gezeigt, bei der der Rahmen noch nicht mit dem Unterwerkzeug 302 in Kontakt ist. In der Fig. 3a ist eine Aufnahme 321 mit einem darin angeordneten Verpackungsrohkörper gezeigt. Jeweils links und rechts der Aufnahme 321 sind, wie bereits mit Bezug auf Fig. 2 erläutert, Klemmmechanismen vorgesehen. In der hier dargestellten Ausführungsform umfasst jeder Klemmmechanismus einen Anker 330 sowie ein Klemmelement 340, das in einer Führung 350 beweglich gelagert ist, so dass es in Richtung auf die Aufnahme 321 zu oder von dieser weg bewegt werden kann.

Der Anker 330 sowie das Klemmelement 340 sind zu diesem Zweck so konfiguriert, dass, wie im Folgenden noch beschrieben wird, eine Abwärtsbewegung des Ankers in eine Bewegung des Klemmelements 340 auf die Aufnahme 321 zu übersetzt wird.

In der hier dargestellten Ausführungsform wird die Bewegung des Klemmelements 340 lediglich horizontal erfolgen. Es sind jedoch auch Ausführungsformen denkbar, bei denen das Klemmelement auch in vertikaler Richtung bewegt wird. Bevorzugt können dabei Bewegungen des Klemmelements nach unten (zumindest in der hier dargestellten Bildrichtung) sein, da so ein Verpackungsrohkörper in der Aufnahme 321 gegen den Boden der Aufnahme gezogen und nicht von diesem weg bewegt wird (was bei einer Bewegung des Klemmelements nach oben im Bild der Fall wäre), was beim nachfolgenden Ausformen der Verpackungsmulde nachteilig sein könnte.

In der hier dargestellten Ausführungsform umfassen die Klemmelemente 340 weiterhin ein optionales Reibelement 341. Das Reibelement 341 ist an der Seite des Klemmelements 340 angeordnet, das in Richtung der Aufnahme 321 weist. Dabei kann es sich entweder um ein separates Bauteil des Klemmelements 340 handeln, das mit diesem optional lösbar verbunden ist (über ein Klebeelement oder Schraubelement oder Steckerelement oder ähnliches), oder das Reibelement kann als Teil der Oberfläche des Klemmelements bereits in das Klemmelement selbst integriert sein. Grundsätzlich kann vorgesehen sein, dass das Reibelement 341 einen hohen Haftreibungskoeffizienten bezüglich des Materials des Verpackungsrohkörpers, also beispielsweise gegenüber Pappe, Naturfaser, Bambus, Plastik o.ä. aufweist. Ein hoher Haftreibungskoeffizient wird dabei als ein solcher Haftreibungskoeffizient angesehen, dessen Wert wenigstens 10%, bevorzugt 20%, besonders bevorzugt wenigstens 50% größer ist, als der Haftreibungskoeffizient zumindest einer weiteren Materialkomponente der Formstation, die mit dem Verpackungsrohkörper in Kontakt kommt, insbesondere die Aufnahme 321. Insbesondere kann der Haftreibungskoeffizient des Reibungselements bezüglich des Materials des Verpackungsrohkörpers größer als 0,8, bevorzugt größer als 0,9, besonders bevorzugt größer als 0,95 sein. Das Reibelement 341 kann insbesondere aus Gummi oder Polyurethan bestehen oder eine der Aufnahme zugewandte Oberfläche aus oder umfassend zumindest eines dieser Materialien aufweisen. Damit kann trotz geringer in Richtung der Aufnahme 321 wirkender Klemmkraft, die von dem Klemmelement auf den Verpackungsrohkörper ausgeübt wird, ein Verrutschen des fixierten Verpackungsrohkörpers vermieden werden. Beschädigungen des Verpackungsrohkörpers können so reduziert werden.

In Fig. 3b ist nun ein zeitlich nach der Fig. 3a ausgeführter Verfahrensschritt gezeigt, bei dem der Rahmen 303 in Richtung 370 auf das Unterwerkzeug 302 zu und damit auch in Richtung der Aufnahme 321 bewegt wurde. In Fig. 3b befindet sich der Rahmen 303 in berührendem Kontakt mit dem Unterwerkzeug 302, wirkt jedoch noch keine Kraft in Richtung auf den Anker 330 aus, so dass dieser noch in seiner in Fig. 1 dargestellten Grundstellung angeordnet ist und auch die Klemmelemente noch in der in Fig. 1 gezeigten Position angeordnet sind.

In Fig. 3c erfolgt nun eine weitere Bewegung des Rahmens 303 in Richtung 370 auf das Unterwerkzeug 302 zu, so dass der Anker 330 in Richtung 370 nach unten zu sinken beginnt, da der Rahmen 303 den Anker in Richtung 370 nach unten drückt. Durch die Profilierung des Ankers und die Profilierung des Klemmelements 340 wird das Klemmelement in der Führung 350 (siehe Fig. 3a) nun in horizontaler Richtung 380 auf die Aufnahme 321 zu bewegt. Dabei umfasst der Anker, wie in Fig. 3c zu erkennen eine Materialauswölbung, die das Klemmelement beim Herunterdrücken des Ankers durch den Rahmen 303 in der Führung 350 auf die Aufnahme 321 zu bewegt.

Dieser Prozess setzt sich in Fig. 3d fort, während der Rahmen 303 weiter in Richtung 370 auf das Unterwerkzeug 302 zubewegt wird und solang der Anker noch eine nach außen (gesehen von der Mittelachse des Ankers) sich fortsetzende Materialauswölbung umfasst. Wie anhand von Fig. 3d zu erkennen, besteht die Profilierung/Materialauswölbung des Ankers 330 in einer in Richtung der Aufnahme 321 sich auswölbenden Materialstruktur. Diese hat jedoch eine maximale Auswölbung und verläuft danach (wie in Fig. 3d zu erkennen) vertikal weiter.

Dies bewirkt, dass bei anschließendem weiteren Bewegen des Rahmens 303 in Richtung 370 der Anker 330 an dem Klemmelement 340 entlanggleitet, ohne dass dieses weiter in Richtung 380 bewegt wird. Das Klemmelement 340 wird durch den Anker 330 also trotz des weiteren Bewegens des Rahmens in der Klemmposition gehalten, um beispielsweise zu große Klemmkräfte auf einen Verpackungsrohkörper in der Aufnahme 321 zu vermeiden. Dies ist in Fig. 3e gezeigt.

Um zu verhindern, dass das Klemmelement zu weit aus der Führung herausragt und es so etwas zu Beschädigungen des Verpackungsrohkörpers kommt, kann vorgesehen sein, dass in der Führung 350 ein Anschlag ausgebildet ist, gegen den ein Teil des Klemmelements 340 bei der Bewegung in Richtung der Aufnahme 321 (in Richtung 380) anschlägt, wenn die maximale Bewegungsamplitude des Klemmelements in Richtung 380 erreicht ist. Das Klemmelement 340 kann hierzu entsprechende Nasen oder ähnliche aus der äußeren Form des Klemmelements herausragende Elemente aufweisen. Ein entsprechender zweiter Anschlag kann auch vorgesehen sein, um die Freigabeposition, in die das Klemmelement etwa in Fig. 3a verfahren ist, zu definieren. So wird vermieden, dass das Klemmelement zu weit in der Führung 350 versinkt, womit Probleme bei der Bewegung des Klemmelements entlang der äußeren Kontur des Ankers (etwa zu Verkantungen) vermieden werden können.

Allgemein kann vorgesehen sein, dass entweder die in Fig. 3 dargestellte Führung und/oder das Klemmelement und/oder der Anker eine solche Form aufweisen, dass die Bewegung des Klemmelements 340 nicht über den gesamten Hubweg des Rahmens 303 entlang der Richtung 370 erfolgt oder insbesondere keine konstante Bewegung des Klemmelements bewirkt wird.

Dies kann beispielsweise durch Wahl des Anstellwinkels der Profilierung/Materialauswölbung des Ankers eingestellt werden. Ein bezüglich der Horizontalen kleiner Winkel (beispielsweise 10°, 20° oder 30°) bewirkt eine starke Bewegung des Klemmelements in Richtung 380. Ein größerer Winkel von beispielsweise 45° oder größer als 45°, wie etwa 65°, bewirkt nur eine moderate Bewegung des Klemmelements 340 in Richtung 380. Ist keine Profilierung/Materialauswölbung des Ankers in vertikaler Richtung vorgesehen, bewirkt dies in der hier dargestellten Ausführungsform keine Bewegung des Klemmelements.

Durch eine entsprechende Wahl der äußeren Kontur des Klemmelements und beispielsweise sich abwechselnde Bereiche einer Profilierung/Materialauswölbung, die mit dem Anker in Verbindung steht, kann hier ebenfalls Einfluss auf die Bewegung des Klemmelements genommen werden. Ebenso kann durch die Ausrichtung der Führung, die die Bewegung des Klemmelements 340 beschränkt, eine Beeinflussung der Bewegung des Klemmelements in Richtung 380 erfolgen.

In Fig. 3e ist zu erkennen, dass der Anker 330 zusätzlich zu der oberen Materialkonturierung 332, die eben diskutiert wurde, auch ein Mitnahmeelement 331 am unteren Ende des Ankers umfasst.

Wie in den Fig. 3a und 3b zu erkennen, kann dieses Mitnahmeelement 331 von unten an das Klemmelement 340 angreifen und bei einem erneuten Nach-Oben-Bewegen (entgegen der Richtung 370) des Ankers 330, ein Mitnehmen des Klemmelements 340 in eine Richtung entgegengesetzt der Richtung 380 bewirken, so dass das Klemmelement von der Aufnahme entfernt wird, wenn der Anker 330 nach oben bewegt wird. Das Nach-Oben-Bewegen kann etwa durch das bereits mit Bezug auf die Fig. 2 beschriebene Rückstellelement bewirkt werden, das zu diesem Zweck mit dem Anker 330 verbunden sein kann und bei einem Anheben des Rahmens 303 ein Anheben des Ankers entgegen der Richtung 370 bewirken kann.

Dadurch wird das Klemmelement 340 in der entgegengesetzten Richtung bewegt und eine Freigabe der in der Aufnahme ausgeformten Verpackungsmulde kann erfolgen.

Während in der hier dargestellten Ausführungsform der Klemmmechanismus einen Anker und ein von diesem Anker bewegbares Klemmelement umfasst, wobei die Bewegung insbesondere durch die Wechselwirkung mit der äußeren Kontur des Ankers in der Führung 350 sowie der Kontur des Klemmelements 340 bewirkt wurde, sind hier auch andere Ausführungen des Klemmmechanismus denkbar.

Als Teil des Klemmmechanismus können beispielsweise auch geführte Winkelelemente oder entlang der Richtung 370 bewegbare Drehelemente vorgesehen sein. Beispielsweise kann anstelle des Ankers eine Schraube in einem Gewinde angeordnet sein, das sich in Richtung 370 erstreckt, wobei die Schraube in einem zur Aufnahme 321 hin freiliegenden Bereich des Gewindes eine von der Zylinderform abweichende, nicht-rotationssymmetrische Form aufweist, die das Klemmelement bei fortlaufender Drehung betätigen kann. Im Querschnitt kann eine solche Schraube beispielsweise eine ovale Gestalt oder Tropfengestalt aufweisen, so dass bei Drehung der Schraube das Klemmelement beim Entlanglaufen an der Kontur der Schraube bewegt wird.

Die genaue Realisierung des Klemmmechanismus ist hier nicht beschränkt. Für einige Ausführungsformen ist jedoch wesentlich, dass der Klemmmechanismus bevorzugt allein durch die Betätigung des Rahmens bzw. die Bewegung des Rahmens in Richtung des Unterwerkzeugs betätigt wird, ohne dass hierzu weitere Antriebselemente, wie etwa separate elektrische Antriebe für den Klemmmechanismus, vorgesehen werden. In diesem Sinne kann der Klemmmechanismus als passiver Klemmmechanismus verstanden werden.

## Patentansprüche

1. Formstation (100) zum Ausformen von Verpackungsmulden, die Formstation umfassend ein Oberwerkzeug (101) und ein Unterwerkzeug (102), die relativ zueinander bewegbar sind, wobei das Unterwerkzeug wenigstens eine Aufnahme (121) für einen Verpackungsrohkörper umfasst, wobei die Formstation (100) weiterhin einen mit dem Unterwerkzeug beweglich verbundenen Rahmen (103) umfasst, der zwischen dem Oberwerkzeug (101) und dem Unterwerkzeug (102) angeordnet ist, wobei das Unterwerkzeug wenigstens einen Klemmmechanismus (240, 260) zum Fixieren eines Verpackungsrohkörpers (222) in der Aufnahme (221) umfasst und wobei der Klemmmechanismus (240, 260) ein Klemmelement (241, 261) umfasst, das durch eine Bewegung des Rahmens (103) relativ zum Unterwerkzeug (102) betätigbar und zum Fixieren eines Verpackungsrohkörpers in der Aufnahme ausgebildet ist.

2. Formstation (100) nach Anspruch 1, wobei der Klemmmechanismus (240) einen beweglichen Anker (330) umfasst und wobei das Klemmelement (340) in einer Führung (350) angeordnetes ist, wobei der Klemmmechanismus ausgebildet ist, eine Bewegung des Rahmens relativ zum Unterwerkzeug (102) in eine Bewegung des Ankers (330) umzusetzen und durch die Bewegung des Ankers eine Bewegung des Klemmelements (340) in der Führung (350) zu bewirken.

3. Formstation (100) nach Anspruch 2, wobei der Anker (330) und/oder die Führung (350) und/oder das Klemmelement (350) eine Form aufweisen, die so beschaffen ist, dass sie eine über den Hubweg des Rahmens (103) nicht konstante Bewegung des Klemmelements (340) bewirken können.

4. Formstation (100) nach einem der Ansprüche 1 bis 3, wobei die Formstation (100) wenigstens zwei Aufnahmen (221, 271) umfasst und der Klemmmechanismus (260) als gemeinsamer Klemmmechanismus zum Fixieren von Verpackungsrohkörpern in den wenigstens zwei Aufnahmen (221, 271) ausgebildet ist.

5. Formstation (100) nach Anspruch 4, wobei der gemeinsame Klemmmechanismus (260) zwei Klemmelemente (261, 263) umfasst, wobei jeweils eines der Klemmelemente einer der wenigstens zwei Aufnahmen zugeordnet ist und wobei die Klemmelemente durch eine Bewegung des Rahmens (103) relativ zum Unterwerkzeug (102) gleichzeitig betätigbar sind.

6. Formstation (100) nach einem der Ansprüche 1 bis 5, wobei jeder Aufnahme (121) der Formstation (100) zwei Klemmmechanismen (240, 260) zugeordnet sind, wobei jeder Klemmmechanismus ein Klemmelement (241, 263) umfasst und die Klemmelemente angeordnet sind, um einen Verpackungsrohkörper an gegenüberliegenden Seiten zu fixieren.

7. Formstation (100) nach einem der Ansprüche 1 bis 6, wobei das Klemmelement (241) auf einer der Aufnahme zugewandten Seite ein Reibelement (341) umfasst, wobei das Reibelement eine äußere Oberfläche mit einem Material mit hohem Reibungskoeffizienten bezüglich wenigstens einem von Pappe, Naturfaser, Papier, Bambus, Plastik umfasst.

8. Formstation (100) nach einem der Ansprüche 1 bis 7, wobei der Rahmen (103) eine zu der Aufnahme (121) entsprechende Öffnung aufweist, sodass ein Verpackungsrohkörper bei einer Bewegung des Rahmens (103) auf das Unterwerkzeug (102) zu durch die Öffnung hindurchtreten kann.

9. Formstation (100) nach einem der Ansprüche 1 bis 8, wobei der Rahmen (103) mit dem Unterwerkzeug (102) mittels eines Rückstellelements (231) verbunden ist, das ein Rückstellen des Rahmens (103) in eine Ausgangsposition beim Auseinanderbewegen des Unterwerkzeugs (102) und des Oberwerkzeugs (101) bewirken kann, und/oder wobei der Klemmmechanismus (240) ein Rückstellelement (242) umfasst, das ein Rückstellen des Klemmelements (241) in eine Freigabeposition beim Auseinanderbewegen des Unterwerkzeugs (102) und des Rahmens (103) bewirken kann.

10. Verfahren zum Ausformen von Verpackungsmulden mittels einer Formstation (100), wobei die Formstation (100) ein Oberwerkzeug (101) und ein Unterwerkzeug (102) umfasst, die relativ zueinander bewegbar sind, wobei das Unterwerkzeug (102) wenigstens eine Aufnahme (121) für einen Verpackungsrohkörper umfasst, wobei die Formstation (100) weiterhin einen mit dem Unterwerkzeug (102) beweglichen verbundenen Rahmen (103) umfasst, der zwischen dem Oberwerkzeug (101) und dem Unterwerkzeug (102) angeordnet ist, wobei das Unterwerkzeug (102) wenigstens einen Klemmmechanismus (240, 260) zum Fixieren des Verpackungsrohkörpers in der Aufnahme (221) umfasst und wobei der Klemmmechanismus (240, 260) ein Klemmelement (241, 261) umfasst, das durch eine Bewegung des Rahmens (103) relativ zum Unterwerkzeug (102) betätigt wird und einen Verpackungsrohkörpers in der Aufnahme (221) fixiert, wobei der Rahmen (103) durch ein Aufeinanderzubewegen des Unterwerkzeugs (102) und des Oberwerkzeugs (101) in Richtung des Unterwerkzeugs (102) bewegt wird und hierdurch das Klemmelement (241, 261) zum Fixieren des Verpackungsrohkörpers in der Aufnahme betätigt wird.

11. Verfahren nach Anspruch 10, wobei der Klemmmechanismus (240) einen beweglichen Anker (330) umfasst und wobei das Klemmelement (340) in einer Führung (350) angeordnetes ist, wobei der Klemmmechanismus (240) eine Bewegung des Rahmens (103) relativ zum Unterwerkzeug (102) in eine Bewegung des Ankers (330) umsetzt und wobei die Bewegung des Ankers eine Bewegung des Klemmelements (340) in der Führung (350) bewirkt.

12. Verfahren nach Anspruch 11, wobei der Anker (330) und/oder die Führung (350) und/oder das Klemmelement (340) eine Form aufweisen, die so beschaffen ist, dass sie eine über den Hubweg des Rahmens (103) nicht konstante Bewegung des Klemmelements (340) bewirken.

13. Verfahren nach einem der Ansprüche 10 bis 12, wobei das Klemmelement (340) auf einer der Aufnahme zugewandten Seite ein Reibelement (341) umfasst, wobei das Reibelement eine äußere Oberfläche mit einem Material mit hohem Reibungskoeffizienten bezüglich des Materials des Verpackungsrohkörpers (222) umfasst.

14. Verfahren nach einem der Ansprüche 10 bis 13, wobei der Rahmen (103) eine zu der Aufnahme (221) entsprechende Öffnung (231) aufweist, sodass ein Verpackungsrohkörper bei einer Bewegung des Rahmens (103) auf das Unterwerkzeug (102) zu durch die Öffnung hindurchtritt.

15. Verfahren nach einem der Ansprüche 10 bis 14, wobei der Rahmen (103) mit dem Unterwerkzeug (102) mittels eines Rückstellelements (231) verbunden ist, das ein Rückstellen des Rahmens (103) in eine Ausgangsposition beim Auseinanderbewegen des Unterwerkzeugs (102) und des Oberwerkzeugs (101) bewirkt, und/oder wobei der Klemmmechanismus (240) ein Rückstellelement (242) umfasst, das ein Rückstellen des Klemmelements (241) in eine Freigabeposition beim Auseinanderbewegen des Unterwerkzeugs (102) und des Rahmens (103) bewirkt.
